# EUROPEAN PATENT APPLICATION

(11) **EP 4 607 320 A1**
(43) Date of publication of application: **27.08.2025**
(21) Application number: 25155461.4
(22) Date of filing: 03.02.2025
(51) Int. Cl.: G06F 1/3206, G06F 3/0488, G06F 9/4401

(54) **POWER SAVING IN MOBILE COMMUNICATION DEVICES**

(30) Priority: 20.02.2024 GB 202402376
(71) Applicant: Nokia Technologies Oy, 02610 Espoo (FI)
(72) Inventor: THANGARAJAN, Ashok Samraj, Cambridge (GB); AL-NAIMI, Khaldoon, Beaconsfield (GB); DANG, Ting, Cambridge (GB); FERLINI, Andrea, Cambridge (GB); LIU, Yang, Cambridge (GB); MONTANARI, Alessandro, Cambridge (GB)
(74) Representative: Nokia EPO representatives

(57) **Abstract**

The specification describes an apparatus for checking for one or more notifications, detecting at least one first user interaction and launching a low power management process in response to the detecting at least one notification and the at least one first user interaction. The low power management process uses at least part of a boot memory of a processor, and wherein the low power management process runs while at least one operational layer of the apparatus is deactivated. Further, the apparatus enables provisioning of one or more first user interface elements corresponding to the at least one detected notification.

## Description

### Field

The present specification relates to power saving, particularly to power saving in mobile communication devices or smart devices.

### Background

Low power modes are known in the field of smart devices or mobile communication devices. There remains a need for improvement in power saving techniques.

### Summary

In a first aspect, this specification provides an apparatus comprising: means for checking for one or more notifications; means for detecting at least one first user interaction; means for launching a low power management process in response to detecting at least one notification and in response to detecting the at least one first user interaction, wherein the low power management process uses at least part of a boot memory of a processor, and wherein the low power management process runs while at least one operational layer of the apparatus is deactivated; and means for enabling provision of one or more first user interface elements corresponding to the at least one detected notification.

In some examples, the at least one operational layer that is deactivated comprises at least one of an operating system layer or an application layer.

In some examples, the means for launching the low power management process further comprises at least one of: means for copying a first initialization code for at least one application corresponding to the detected at least one notification to the boot memory, or means for copying a second initialization code for the at least part of the boot memory of the processor that is used by the low power management process.

In some examples, wherein the one or more first user interface elements comprise at least one of: a preview of the detected at least one notification, a preview of a first threshold number of detected one or more notifications, or at least one element for allowing user interaction corresponding to the detected one or more notifications.

In some examples, the one or more notifications comprise one or more system notifications.

In some examples, the one or more notifications comprise one or more communication notifications.

Some examples include means for storing the detected at least one notification in a notification buffer.

Some examples include means for detecting at least one second user interaction; and means for launching one or more applications relating to the detected at least one notification in response to the detecting of the at least one second user interaction.

Some examples include means for deactivating the low power management process after a first predefined time period.

In some examples, the means for checking for the one or more notifications further comprises means for periodically checking for notifications.

In some examples, wherein the means for periodically checking for the notifications further comprises means for using a real time clock, wherein the real time clock is part of the apparatus or is external to the apparatus.

In some examples, the apparatus is a one or more of a mobile communication device (e.g. smartphone, smart tablet, or the like) or a smart wearable device (e.g. smartwatch, smart earbuds, smart earphones, smart glasses, or the like).

The means may comprise at least one processor; and at least one memory including or storing computer program code or instructions, the at least one memory and the computer program code or instructions configured, with the at least one processor, to cause the performance of the apparatus.

In a second aspect, this specification describes a method comprising: checking for one or more notifications; detecting at least one first user interaction; launching a low power management process in response to detecting at least one notification and in response to detecting the at least one first user interaction, wherein the low power management process uses at least part of a boot memory of a processor, and wherein the low power management process runs while at least one operational layer of the apparatus is deactivated; and enabling provision of one or more first user interface elements corresponding to the at least one detected notification.

In some examples, the at least one operational layer that is deactivated comprises at least one of an operating system layer or an application layer.

In some examples, launching the low power management process further comprises at least one of: copying a first initialization code for at least one application corresponding to the detected at least one notification to the boot memory, or copying a second initialization code for the at least part of the boot memory of the processor that is used by the low power management process.

In some examples, wherein the one or more first user interface elements comprise at least one of: a preview of the detected at least one notification, a preview of a first threshold number of detected one or more notifications, or at least one element for allowing user interaction corresponding to the detected one or more notifications.

In some examples, the one or more notifications comprise one or more system notifications.

In some examples, the one or more notifications comprise one or more communication notifications.

Some examples include storing the detected at least one notification in a notification buffer.

Some examples include detecting at least one second user interaction; and launching one or more applications relating to the detected at least one notification in response to the detecting of the at least one second user interaction.

Some examples include deactivating the low power management process after a first predefined time period.

In some examples, checking for the one or more notifications further comprises periodically checking for notifications.

In some examples, periodically checking for the notifications further comprises using a real time clock, wherein the real time clock is part of the apparatus or is external to the apparatus.

In a third aspect, this specification describes an apparatus configured to perform any method as described with reference to the second aspect.

In a fourth aspect, this specification describes computer-readable instructions which, when executed by computing apparatus, cause the computing apparatus to perform any method as described with reference to the second aspect.

In a fifth aspect, this specification describes a computer program comprising instructions for causing an apparatus to perform at least the following: checking for one or more notifications; detecting at least one first user interaction; launching a low power management process in response to detecting at least one notification and in response to detecting the at least one first user interaction, wherein the low power management process uses at least part of a boot memory of a processor, and wherein the low power management process runs while at least one operational layer of the apparatus is deactivated; and enabling provision of one or more first user interface elements corresponding to the at least one detected notification.

In a sixth aspect, this specification describes a computer-readable medium (such as a non-transitory computer-readable medium) comprising program instructions stored thereon for performing at least the following: checking for one or more notifications; detecting at least one first user interaction; launching a low power management process in response to detecting at least one notification and in response to detecting the at least one first user interaction, wherein the low power management process uses at least part of a boot memory of a processor, and wherein the low power management process runs while at least one operational layer of the apparatus is deactivated; and enabling provision of one or more first user interface elements corresponding to the at least one detected notification.

In a seventh aspect, this specification describes an apparatus comprising: at least one processor; and at least one memory including computer program code or instructions which, when executed by the at least one processor, causes the apparatus to: check for one or more notifications; detect at least one first user interaction; launch a low power management process in response to the detecting of at least one notification and in response to the detecting of the at least one first user interaction, wherein the low power management process uses at least part of a boot memory of the processor, and wherein the low power management process runs while at least one operational layer of the apparatus is deactivated; and enable provision of one or more first user interface elements corresponding to the at least one detected notification.

In an eighth aspect, this specification describes an apparatus comprising a first module configured to check for one or more notifications; a second module configured to detect at least one first user interaction; a third module configured to launch a low power management process in response to detecting at least one notification and in response to detecting the at least one first user interaction, wherein the low power management process uses at least part of a boot memory of a processor, and wherein the low power management process runs while at least one operational layer of the apparatus is deactivated; and a fourth module configured to enable provision of one or more first user interface elements corresponding to the at least one detected notification.

### Brief description of the drawings

Example embodiments will now be described, by way of example only, with reference to the following schematic drawings, in which:
FIGs 1 to 3 are block diagrams of systems in accordance with example embodiments;
FIG. 4 is a flowchart of an algorithm in accordance with an example embodiment;
FIGs 5 and 6 are block diagrams of systems in accordance with example embodiments;
FIGs 7 to 9 are flowcharts of algorithms in accordance with example embodiments;
FIG. 10 is a message sequence in accordance with an example embodiment;
FIG. 11 is a block diagram of components of a system in accordance with an example embodiment; and
FIG. 12 shows an example of tangible media for storing computer-readable code which when run by a computer may perform methods according to example embodiments described above.

### Detailed description

The scope of protection sought for various example embodiments of the invention is set out by the independent claims. The embodiments and features, if any, described in the specification that do not fall under the scope of the independent claims are to be interpreted as examples useful for understanding various example embodiments of the invention.

In the description and drawings, like reference numerals refer to like elements throughout.

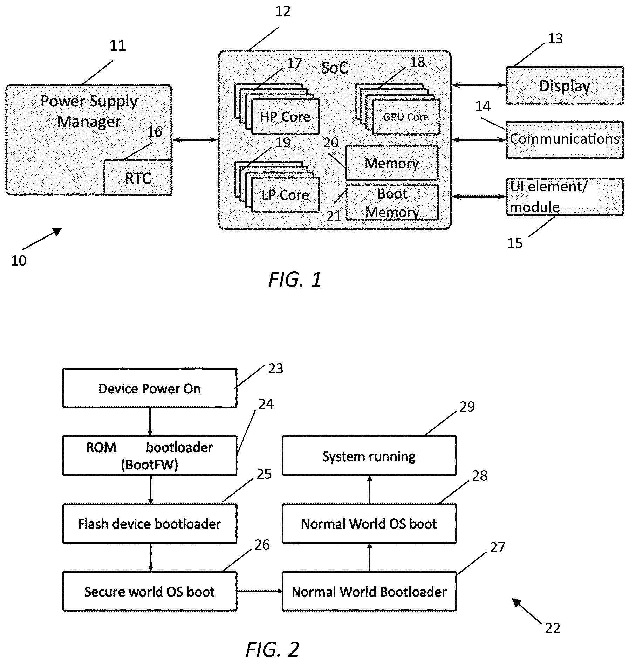

FIG. 1 is a block diagram of a system, indicated generally by the reference numeral 10, in accordance with an example embodiment. System 10 may represent a hardware architecture of a device, such as a mobile communication device, or a smart device (e.g. smart phone, smartwatch, smart tablet, smart earbuds, smart earphones, or the like). The system 10 comprises one or more components, for example, a power supply manager 11, and a processor 12 (e.g. a microprocessor, a system on chip (SoC) processor, or similar). The system 10 optionally comprises a display module 13, a communication module 14 (e.g. radio communication module (hardware and/or software)), and a user interface element/module 15 (e.g. a hardware button or a touchscreen button). The processor 12 may comprise, for example, a high-performance core 17, one or more graphics processing unit (GPU) cores 18, a low power core 19, a main memory 20 and a boot memory 21, or any combination thereof.

In an example embodiment, the system 10 may comprise further a real time clock (RTC) module 16 that may be used for periodically activating (e.g. turning on or waking up from sleep mode) the processor 12 or at least part of the processor 12. The RTC 16 may be part of the power supply manager 11. Alternatively, or in addition, the RTC 16 may be part of a module (e.g. SoC) comprising the processor 12. Alternatively, or in addition, the RTC 16 may be an external component that may be connected to the power supply manager 11 and/or processor 12.

The display module 13 may comprise a display controller and a display of the system 10. The communications module 14 may comprise the radio communication module that, for example, may be used for communications (e.g. wireless communications) of the system with external devices. The communications module 14 may be an external component that may be connected to the processor 12. Alternatively, or in addition, the communications module 14 may be part of the module (e.g. SoC comprising the processor 12. The UI (User Interface) element 15 may allow user interaction of a user with the system 10. For example, the UI element 15 may comprise a button that may be used by a user (e.g. by pressing the button) for turning on or waking up at least part of the system.

FIG. 2 is a block diagram of a system, indicated generally by the reference numeral 22, in accordance with an example embodiment. System 22 comprises an example illustration of a sequence (e.g. a boot sequence of a processor) in which software and/or hardware modules are activated when a device is turned on. The device may be powered on at operation 23, and the processor may be bootstrapped by a ROM (Read Only Memory) boot loader (e.g. ROM SoC boot loader) at operation 24. A complete boot procedure and initialisation of the device may be performed (e.g. by a flash device boot loader) at operation 25. In one example, the ROM space used to bootstrap the processor, may be used to load one or more other applications stored in a flash storage medium or any other non-volatile storage medium.

In one example, a series of one or more optional modules may be booted up. For example, a flash device bootloader may be activated at operation 25, a secure operating system boot module (e.g. firmware or operating system in a secure mode) may be activated at operation 26, a non-secure bootloader (e.g. ARM Normal World ^{™} Bootloader) may be activated at operation 27, a non-secure operating system boot module (e.g. standard operating system such as Linux^{™}, Android ^{™}, iOS ^{™}, or the like) may be activated at operation 28, and the system 22 may then start running at operation 29. The operations 25 to 28 may only run when the device is fully booted up, such that this may not be operated in a low power mode.

As shown by the operation 24, a small internal programmable ROM space may be used by a processor 12 of a device during the boot up to boot strap one or more applications. The example embodiments below provide techniques for using said ROM space to perform one or more tasks in addition to booting up the device. For example, while the device is powered on, the processor may start an application, such as a low power management process (e.g. a simple application requiring relatively low memory space, such a notification application) initializing only one or more functions that are required for a desired current operation (e.g. rendering, such as viewing or displaying, a new action notification, a message notification, a system status notification, and/or a new message content from/for a related application without loading the entire application for rendering a related notification), which may be performed from the internal ROM, thus making the operation relatively fast and efficient. Using the internal ROM to perform said operations may enable significant power saving. Further power saving may be enabled as only part of the processor, for example one or few processing units or cores, may be initialized, said tasks may not use a large amount of power, compared to activating other parts of the processor (e.g. operations 25 to 29).

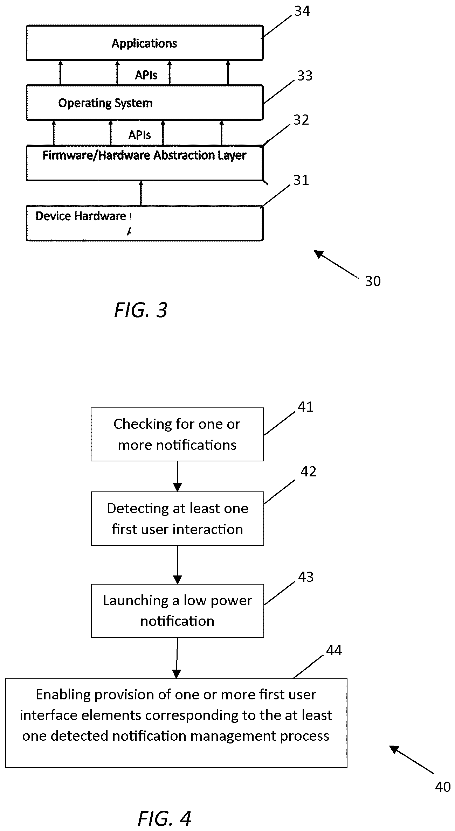

FIG. 3 is a block diagram of a system, indicated generally by the reference numeral 30, in accordance with an example embodiment. System 30 shows an example of various operational layers in a system architecture, for example a system architecture of the system 10 and 22. The system 30 comprises a device hardware layer 31, a firmware or hardware abstraction layer 32, an operating system layer 33, and an applications layer 34. In one example, when a device is off, all the layers 31 to 34 are deactivated. When a device is turned on or activated (e.g. by pressing a button), the operational layers may be activated in the following order: device hardware layer 31 is activated (e.g. device is powered on); firmware or hardware abstraction layer 32 is activated (e.g. device is booted up using a programmable ROM space, as discussed with reference to FIG. 2); the operating system layer 33 is activated (e.g. in cases of smartphones 'Android ^{™}' or 'iOS ^{™}' operating system is activated using one or more application programming interfaces (API)); and lastly the application layer 34 is activated using one or more application programming interfaces (APIs) for individual applications (e.g. messaging applications, social media applications, photo/camera applications, calendar application, or the like).

In some example embodiments, the firmware or hardware abstraction layer 31 may be used for one or more specific tasks, such as viewing and/or interacting with notifications, while using a minimal amount of power, as the task may not require the operating system layer 33 and the application layer 34 to be activated. Details of performing such tasks are provided below.

FIG. 4 is a flowchart of an algorithm, indicated generally by the reference numeral 40, in accordance with an example embodiment. The algorithm 40 may be performed at an apparatus, such as the system 10.

The algorithm 40 may start at an operation 41, comprising checking for one or more notifications, e.g., one or more notifications of one or more actions. In an example embodiment, the checking may be performed periodically. For example, periodically checking for one or more notifications may comprise using a real time clock (e.g. the RTC 16), where the RTC may be part of the apparatus or may be external to the apparatus. Initially, at least part of the apparatus, e.g. the system 10, may be deactivated (e.g. apparatus may be turned off, with just a part of the processor, or an RTC module being activated for checking for notifications).

Next, at an operation 42, at least one first user interaction may be detected. For example, the at least one first user interaction may comprise a user pressing a button (e.g. the UI element 15). This may be an indication that the user may want to view and/or interact with one or more notifications. It would be appreciated that the first user interaction may comprise other forms of user interaction, such as touching a screen, providing a voice command, or the like.

At the operation 43, in response to detecting at least one notification, and/or in response to detecting the at least one first user interaction, a low power management process, e.g. a low power notification management process, may be launched. The low power management process may use at least part of a boot memory (e.g. the boot memory 21 which may be part of the ROM space activated at the operation 24) of a processor (e.g. the processor 12). As such, because the low power management process may run using the boot memory, which may be part of the firmware/hardware abstraction layer 32, the low power management process runs while at least one operational layer, such as the operating system layer 33 and the applications layer 34, of the apparatus is deactivated.

At an operation 44, the low power management process, e.g. the low power notification management process, may enable provision of one or more first user interface elements, such as one or more notifications, corresponding to the at least one detected notification and/or the detected at least one first user interaction. In one example, the one or more first user interface elements may comprise any one of a preview of the detected at least one notification and/or action, a preview of a first threshold number of previously detected one or more notifications and/or actions, or at least one element for allowing user interaction corresponding to the detected at least one notification and/or actions.

Thus, the user may be able to view and/or interact with the one or more notifications and/or actions with a significantly low power usage, as significant power saving may be achieved by maintaining the operating system layer(s) 33 and application layer(s) 34 in a deactivated state.

In an alternative embodiment, the operation 42 may be omitted, and the operation 43 may be performed in response to only detecting at least one notification at the operation 41. As such, in response to detecting at least one notification, the low power management process may be launched at the operation 43, and the provision of one or more first user interface elements, such as one or more notifications, may be enabled at the operation 44. In an example embodiment, if no user interaction is detected within a predefined time period after the provision of the one or more first user interface elements, the one or more first user interface elements may again be provided when a first user interaction is detected at a future time.

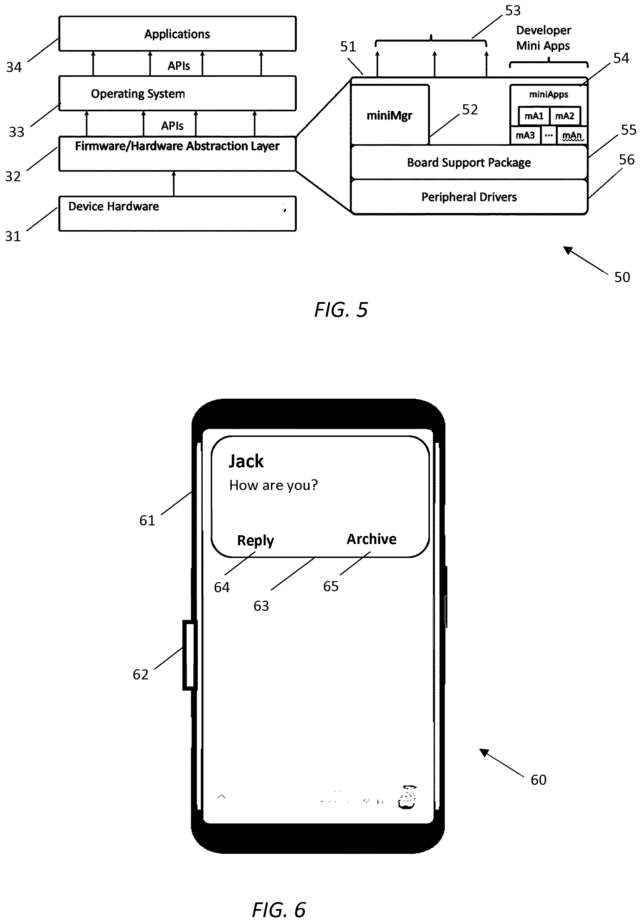

FIG. 5 is a block diagram of a system, indicated generally by the reference numeral 50, in accordance with an example embodiment. The system 50 shows the operational layers 31 to 34 as described with reference to FIG. 3. In an example embodiment, the low power management process may be implemented at the firmware/hardware abstraction layer 32, that is between the device hardware layer 31 and the operating system layer 33.

In an example embodiment, the low power management process is represented by a module 52 (miniMgr), which may be provided as a software at a software stack 51. In on example, the module 52 (miniMgr) may be responsible for managing which mode (e.g. low power mode, ultra low power mode, normal mode) to boot into, which applications to launch, or the like. For example, the low power management process may be activated using the module 52 (miniMgr) in response to detecting at least one notification for an action and/or detecting a first user interaction. In one example, the low power management process may be enabled in response to detecting a battery level of the apparatus being lower than a predefined battery level, or in response to a manual user setting. The APIs 53 may be used (e.g. by an application programmer or developer) to implement low power implementation(s), namely 'miniApps' 54 for corresponding application(s). In one example, the module 52 may enable provision of one or more first user interface elements corresponding to at least one detected notification for an action using one or more miniApps 54 (e.g. extensions of applications that may use significantly lower power than a full application) for individual applications (e.g. mA1, mA2...mAn). The miniApps 54 may communicate with the miniMgr for the purposes of enabling provision of one or more first user interface elements. In an example embodiment, the miniApps 54 may provide limited functionality (e.g. limited features) of applications, such that said limited functionality may be carried out using the limited ROM space at the boot memory. For example, the mA1 may be an extension for a messaging application, and may only provide the user with a preview of a latest notification and/or a functionality to respond to the latest notification, rather than launching the full messaging application.

The firmware/hardware abstraction layer 32 may further comprise a board support package 55 and peripheral drivers 56. In one example, the firmware/hardware abstraction layer may be a set of software library provided by a device manufacturer to interact with the peripheral of the SoC.

In some scenarios, for usage of a mobile communications device (e.g. a smartphone, smart tablet, smartwatch, or the like) a significant amount of power may be used while a user checks for notifications. While the device is in an ON state (even if it is in a generic low power mode), all the operational layers 31 to 34 may need to be in an active state in order to allow the user to check for one or more notifications. As such, the techniques described herein allows the user to check for notifications while at least some or all of the operational layers (e.g. the OS (Operating System) layer 33 and the applications layer 34) are deactivated, as the low power management process may be implemented in the abstraction layer 32, thus providing relatively fast and low-power notification checking (e.g. as the layers 33 and 34 do not need to be activated, thus saving boot-up time and energy). As only part of the processor is activated for enabling notification checking, one or more other peripherals or clocks to other peripherals may be deactivated, thus saving more energy. By utilizing the minimal number of peripherals, the system can power off/switch off the clocks to other peripherals.

In an example embodiment, with the implementation of the low power management process, the processor may be switched off, and only part of the processor may be switched on when receiving a trigger from the RTC 16 for periodically checking for notifications which may only use power in the order of micro-amps. In one example, for a device with an i.MX ^{™} processor, in the deepest mode the processor may exhaust a 10% of the capacity of a 4700mAh battery in approximately 7 hours (without considering any other peripheral such as display radio etc) where as if a low power external RTC is implemented which can be as low as 100uA (conservative number it can be as low as 50nA) and the processor kept off it will last for 4700 hours. Thus, the techniques described herein provide significant power saving.

In an example embodiment, the low power management process may be deactivated after a first predefined time period. For example, after the predefined time period, the processor and the low power management process may again be deactivated in order to save power, and may subsequently be woken up periodically based on signals from the RTC. In one example, there may be a delay in displaying an action, for example, a notification for or via communications (e.g. radio messages), as the checking for actions is periodic. However, such delay may not be significant, and the power saving achieved from such periodic checking may be significant and desirable. Further, a user of the process 40 or 50 can adjust the time period of activation / deactivation, for example, between seconds and minutes.

FIG. 6 is a block diagram of a system, indicated generally by the reference numeral 60, in accordance with an example embodiment.

The system 60 provides an illustration of a mobile communications device 61 (e.g. a smartphone). The mobile communications device 61 may comprise a UI element, such as a button 62 or a touch screen button, for enabling a user interaction. In one example, the low power management process may enable (the operation 44) provision of one or more first user interface elements (e.g. preview of a detected at least one notification), such as a notification 63 in response to detecting a notification, e.g. a notification for an action, and/or detecting a user interaction (e.g. via the button 61). The notification 63, for example, may comprise a message indicating a source/origin of the message and at least partial of full content of the message, e.g. a message from 'Jack' reciting 'How are you?'. The one or more first user interface elements further optionally comprise one or more elements (64, 65) for allowing user interaction corresponding to the detected at least one notification. For example, the element 64 that may enable the user to reply to the message or notification, and the element 65 may enable the user to archive the message or notification. The provision of the notification 63 may be enabled by the low power notification management process (e.g. the process 40) without activating the operating system layer (33) or the applications layer (34) of the device.

In an example embodiment, the one or more first user interface elements may comprise a preview of a first threshold number of previously detected one or more notifications. For example, there may be plurality of notifications displayed on the screen of device 61, where one or more of the plurality of notifications may correspond to same or different applications.

In an example embodiment, the notifications may comprise one or more system notifications, such as calendar notifications, system cleanup notifications, system storage notifications, system battery level notification, internal sensor notification, or the like, or any combination thereof. In another example embodiment, the notifications comprise one or more communication notifications, such as message notifications, social media notifications, external sensor notifications, communication system notifications, or the like, or any combination thereof.

In an example embodiment, the one or more first user interface elements may comprise a notification from a calendar application, such as a notification for a calendar event. The notification for the calendar event may comprise one or more of the name, time, date, location, or participants of the calendar event. The notification for the calendar event may be an invitation and/or a reminder for said calendar event, and may further optionally comprise one or more elements for allowing a user to perform one or more: accepting, declining, adding more participant(s), or adding more reminder(s) for said calendar event.

In an example embodiment, the one or more first user interface elements may comprise a notification from a system application, such as a notification for a system cleanup or system upgrade that may be due. The notification for the system cleanup or upgrade may comprise one or more of the details of the cleanup or upgrade, the amount of time required to do the cleanup or upgrade, the time and date at which the cleanup or upgrade may be scheduled, or the like. The notification may further comprise one or more elements for allowing a user to perform one or more of: scheduling, postponing, or cancelling the cleanup or upgrade.

In an example embodiment, the one or more first user interface elements may comprise a notification from a storage application, such as a notification for informing the user that the storage space (e.g. for photos, documents, emails, etc.) is almost full. The notification from the storage application may comprise one or more of the details about total storage space, available storage space, occupied storage space, storage space occupied by individual applications or files, suggestions for deleting files, or the like. The notification may further comprise one or more elements for allowing a user to view storage details, delete the notification, or the like.

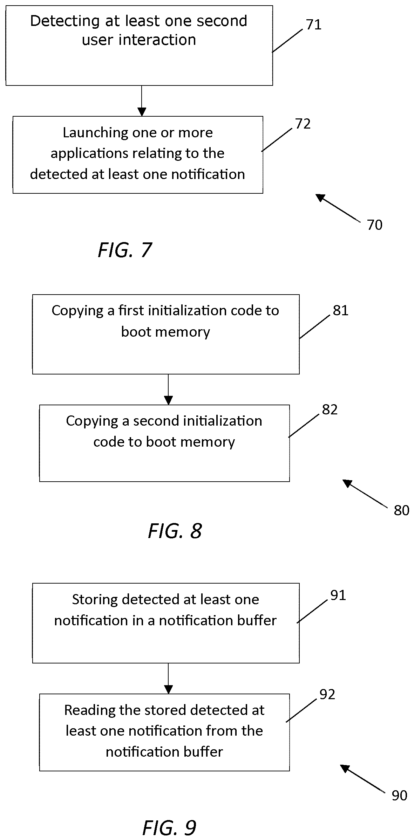

FIG. 7 is a flowchart of an algorithm, indicated generally by the reference numeral 70, in accordance with an example embodiment. At operation 71, at least one second user interaction may be detected. In response to detecting the at least one second user interaction, one or more applications relating to the detected at least one notification may be initiated or launched at operation 72. For example, if the user wants to interact with a notification for performing tasks that may require more resources than that provided by the low power notification management process (i.e. the first user interaction), the user may provide the second user interaction (e.g. clicking on a notification, double pressing a button, or the like) When the second user interaction is detected, the full application may be launched which may require the other operational layers of the apparatus, such as the operating system layer 33 and the applications layer 34 to be activated.

In one example, for a communications notification, such as a notification from a messaging application or a social media application, the user may click on the notification to launch the messaging application or the social media application, which may allow the user to interact (e.g. reply, delete, etc.) the notification, and also additionally allow the user to use the full functionality of the messaging application (e.g. view other conversations, change settings, etc.) or the social media application (e.g. view social media updates, post content, etc.).

In another example, for the calendar notification, the user may click on the notification to launch the calendar application, which may allow the user to interact (e.g. view, edit) the calendar event corresponding to the notification, and may also additionally allow the user to use the full functionality of the calendar application (e.g. create more events, view future dates/months of the calendar, etc.).

In another example, for a system cleanup or upgrade notification, the user may click on the notification to launch the system application, which may allow the user to interact with the notification (e.g. start a system cleanup or upgrade), and also may additionally allow the user to use the full functionality of the system application (e.g. view/change other settings of the system).

In another example, for a storage notification, the user may click on the notification to launch the storage application, which may allow the user to interact with the notification (e.g. delete files, view suggestions for deleting files, view categories of files occupying storage space, or the like), and may also additionally allow the user to use the full functionality of the storage application (e.g. view photos or other files, redirect to other applications that use the storage space, or the like).

In an example embodiment, a multimedia processor may use the following procedure for booting up:
1) Power-on-Reset - generating a reset signal when device is powered on
2) Processor checks the fuses/registers to identify a boot mode.
3) Boot-up starts from the identified boot mode (NAND, eMMC etc.)
4) An internal driver required for the selected boot mode is loaded.
5) A pre-defined memory space that provides initialization code (e.g. BootFW (Boot Firmware)) for RAM (Random-access memory) is copied.
6) Random access memory (RAM) (driver from the pre-defined boot space) is initialized, and bootloader is copied from the predefined memory space.
7) The bootloader initializes the device and provides control to kernel
8) Kernel boots up and at the end transfer control to an application (e.g. android or iOS framework)

In one example, a communications module (e.g. a radio interface) may function without support from processor, once configured, for receiving messages, and any other sensor required for communication can be independent of the processor's active or inactive state.

At point number 5, a copied code (the BootFW) may initialize the system and prepares it for the operating system. This code is not necessarily required to be a boot-up code, such that it may be other application code that initializes part of the system that is required for tasks, such as enabling provision of the first user interface element(s). In one example, if there is an error in reading data from a given block of the copied code (e.g. error checking and correction (ECC) check fail), the processor may automatically jump to the next block to read and continue. The predefined memory space may have multiple container blocks which may be used one after another, as configured by a boot up initialization code.

FIG. 8 is a flowchart of an algorithm, indicated generally by the reference numeral 80, in accordance with an example embodiment. In one example, the operations of algorithm 80 may be performed as part of launching the low power management process (the operation 43).

At operation 81, a first initialization code may be copied to the boot memory, where the first initialization code may correspond to at least one application corresponding to the detected at least one action or notification. At operation 82, a second initialization code may be copied to the boot memory, where the second initialization code may correspond to at least part of the boot memory of the processor that is used by the low power management process.

The step of copying the first initialization code at the operation 81 may be implemented at the stage described by point number 5 of the above booting up procedure above. Operation 82 may be performed in addition to the operation 81, where the at least part of the boot memory (e.g. predefined memory space) is specified by copying the second initialization code (BootFW) corresponding to the at least part of the boot memory.

FIG. 9 is a flowchart of an algorithm, indicated generally by the reference numeral 90, in accordance with an example embodiment. At operation 91, at least one notification, such as the at least one notification detected by checking for notifications in operation 41, may be stored in a notification buffer. For example, the notification buffer may comprise a communication buffer (e.g. radio communication buffer) for storing notifications relating to communications applications (e.g. messaging applications, social media applications, or the like). Alternatively, or in addition, the notification buffer may comprise a system notification buffer for storing notifications relating to system notifications.

At operation 92, the stored detected at least one notification may be read from the notification buffer, for example, for enabling provision of one or more first user interface elements. The detected at least one notification may be read for providing a preview of the detected at least one notification.

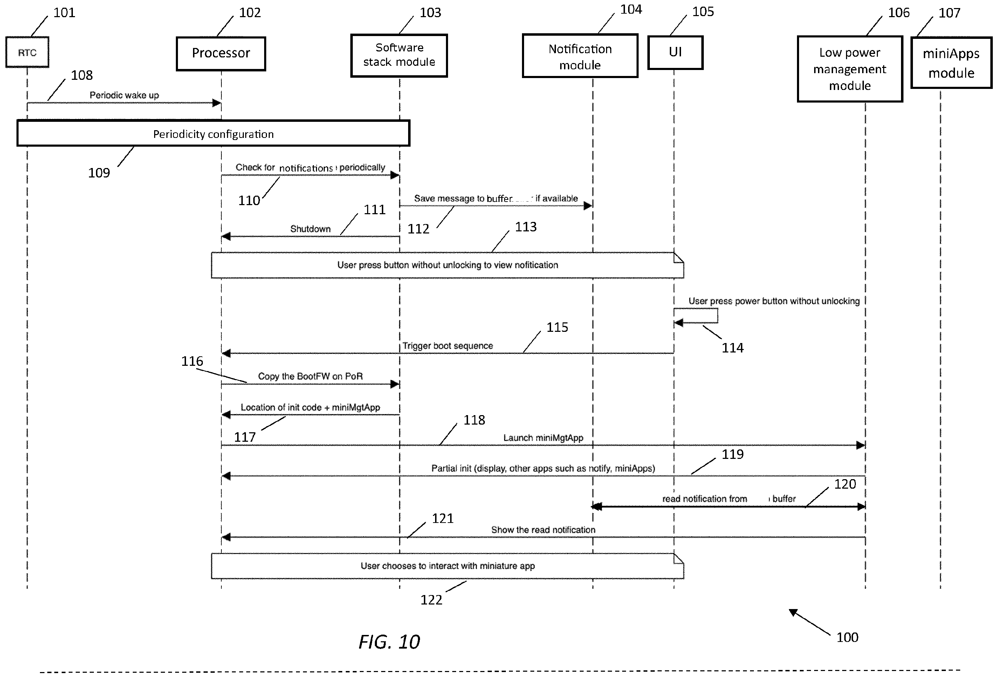

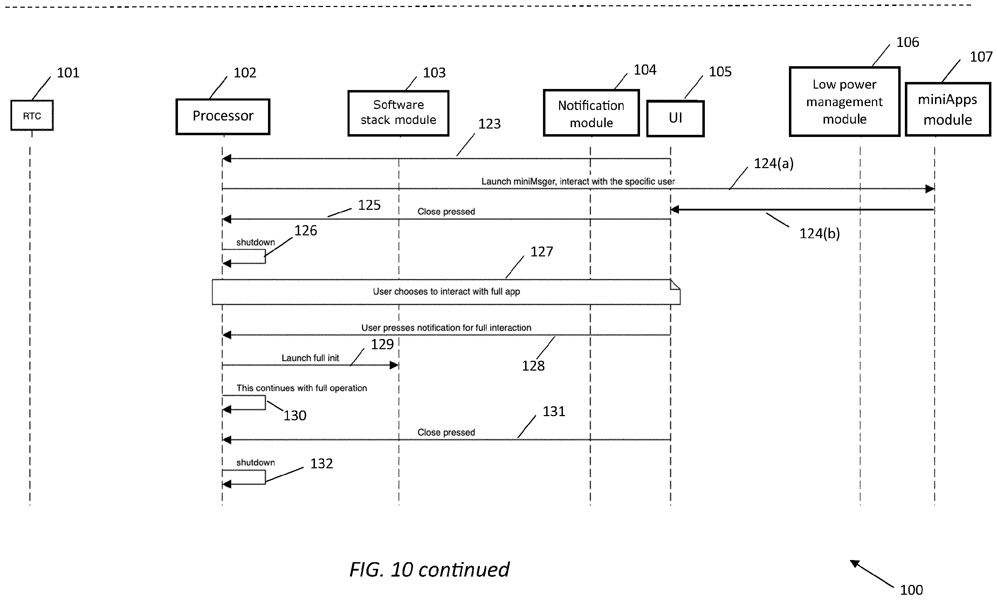

FIG. 10 is a message sequence, indicated by the reference numeral 100, in accordance with an example embodiment. FIG. 10 extends from drawing sheet 5 to drawing sheet 6.

The message sequence 100 shows communications or operations of an RTC module 101 (e.g. similar to RTC 16), a processor (e.g. SoC processor) module 102 (e.g. similar to processor 12), a software stack module 103 (e.g. similar to software stack 51), a module 104 (e.g. similar to communications module 14, or a systems module for the device), a UI element 105 (e.g. similar to UI element 15, such as a button), a low power management process 106 (e.g. similar to module 52), such as a low power notification management process, and a miniApp module 107 (e.g. similar to miniApps 54).

The RTC 101 may send periodic wake up messages 108 to the processor module 102. The periodicity may be configured (operation 109) by the processor 102 and/or the software stack 103, for example, dependent on an application to which the notification corresponds to and/or user preferences. The processor 102 may then check for notifications periodically with the software stack 103 at operation 110. If a notification is detected, the notification may be stored (e.g. similar to operation 91) in a notification buffer at operation 112. For example, if the notification is a communications notification, the notification module 104 may be a communication module comprising a communication notification buffer, where the communication notification may be stored. Alternatively, or in addition, if the notification is a system notification, the module notification 104 may be a system module comprising a system notification buffer, where the system notification may be stored.

In one example, when a periodic check for notifications 110 is completed, at least part of the processor 102 is shut down in operation 111 (or the processor 102 may fully shut down). In one example, the processor 102 may fully be shut down, and may again wake up when a subsequent periodic wake up message is received from the RTC 101.

At operation 113, a first user interaction may be detected (e.g. similar to operation 42) based on a signal from the UI element 105, for example, as a user press a button (the UI element 105) (e.g. without unlocking the device) at operation 114 in order to view a notification. In response to detecting the first user interaction, a boot sequence may be triggered at operation 115. The boot sequence comprises booting up at least part of the processor 102 and may further comprise launching the low power management process, such as the low power notification management process.

At operation 116, the processor 102 may cause an initialization code (e.g. BootFW) to be copied after 'power-on-reset' (PoR) (e.g. as the button had been pressed). At operation 117, the software stack 103 may provide a location of the initialization code and/or the location of an initialization code for the low power management process to the processor 102.

At operation 118, the low power management process may be launched, and in response, at operation 119, the low power management process 106 may enable partial initialization of one or more applications, such as provision of one or more one or more first user interface elements.

As part of the enabling the provision of the one or more first user interface elements, the at least one detected notification may be read (e.g. similar to operation 92) from the notification buffer at operation 120, and the notification may be displayed to a user at operation 121. The user may then interact with the displayed notification at operation 122.

A user may interact with the displayed notification at operations 123 and 124(a, b), for example by interacting 124(b) with at least one element on a UI launched by a specific miniApp 124(a) for allowing user interaction 125. Said interaction may be provided by the module 107 (e.g. low power implementation of applications with limited functionality/ interaction of the applications) comprising, for example, reply 64, archive 65, delete, open, send, close, etc.

If an interaction, such as the close pressed interaction with the UI element 105 is detected at the operation 125, at least part of the processor, e.g. one or more processing cores, may be deactivated/shutdown at operation 126, such that power is saved. Alternatively, or in addition, the low power management process 106 may also be deactivated. Alternatively, or in addition, one or both of the processor 102 and the low power management process 106 may be deactivated after a first predefined time period of not receiving any interaction from the user.

At operation 127, a user may choose to interact with a full application relating to the detected action/notification. In this case, a second interaction may be detected (e.g. similar to the operation 71) from the UI element 105 at operation 128, and the full application is launched at operation 129 (e.g. similar to the operation 72). The full functionality of the application is then available at operation 130, and the processor is fully activated (e.g. OS layer and Application layer is activated).

If an interaction, such as a close pressed interaction with the UI element 105 is detected at operation 131, at least part of the processor may be deactivated at operation 132, such that power is saved.

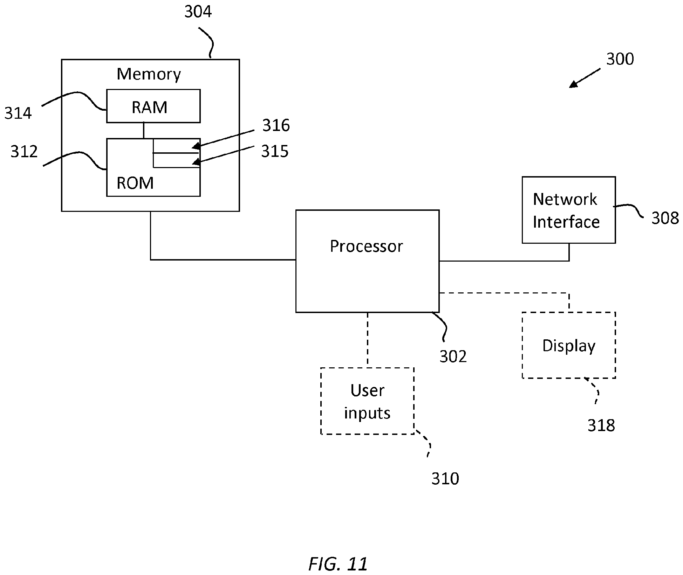

For completeness, FIG. 11 is a schematic diagram of one or more components or modules 302 to 318 implementing the one or more of the example embodiments described in the previous figures 1 - 10, which hereafter are referred to generically as a processing system or apparatus 300. The processing system 300 may have one or more processors 302, one or more memories 304 connected to the one or more processors and comprised of one or more RAM 314 and ROM 312 memories, and, optionally, one or more user inputs 310 and outputs, such as displays, 318. The processing system 300 may comprise one or more network/apparatus interfaces 308 for connection to one or more communication network/apparatus, e.g. one or more modems which may be wired or wireless, such a cellular telecommunication network, a short range wireless network (such as wireless local area network (WLAN), Bluetooth^{™}, Matter network, etc.). Additionally, the apparatus 300 may comprise or may be communicatively, e.g. wirelessly, connected to one or more sensor devices, for example, a positioning sensor, a motion sensor, a physiological sensor, an IoT sensor, a camera, a microphone, etc. to receive sensor data. The interface 308 may also operate as a connection to other apparatus such as device/apparatus which is not network side apparatus. Thus, direct connection between devices/apparatus without network participation is possible.

The one or more processors 302 are connected to the other components in order to control operation thereof.

The one or more memories 304 may comprise a non-volatile memory, such as a hard disk drive (HDD) or a solid-state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain computer program code which, when executed by the processor implements aspects of the algorithms 40, 70, 80, 90 described above. Note that in the case of small device/apparatus the memory can be most suitable for small size usage i.e. not always hard disk drive (HDD) or solid-state drive (SSD) is used.

The processor 302 may take any suitable form. For instance, it may be a microcontroller, a plurality of microcontrollers, a processor, a multicore processor or a plurality of processors.

The processing system 300 may be a mobile communication device, an IoT (Internet of Things) device, a multimedia device, a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

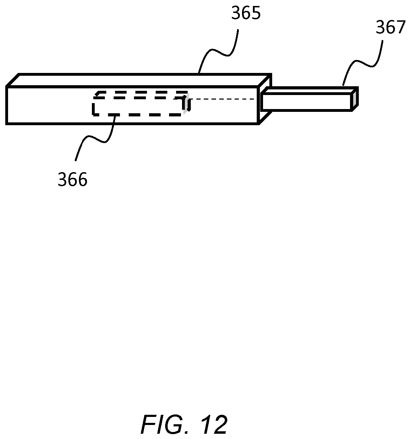

FIG. 12 shows tangible media, specifically a removable memory unit 365, storing computer-readable code or instructions which when run by a computer may perform methods according to example embodiments described above. The removable memory unit 365 may be a memory stick, e.g. a USB (Universal Serial Bus) memory stick, having internal memory 366 for storing the computer-readable code or instructions. The internal memory 366 may be accessed by a computer system via a connector 367. Other forms of tangible storage media may be used. Tangible media can be any device/apparatus capable of storing data/information/instructions which data/information can be exchanged between devices/apparatus/network/instructions.

Example embodiments of the present invention may be implemented by various means, for example, in software, instruction set, hardware, circuitry, application logic or a combination of the software, instruction set, hardware, circuitry and application logic. The software and/or application logic may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to means of, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow charts or message sequence of Figures 4, 7 to 10 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

## Claims

1. An apparatus comprising:
means for checking for one or more notifications;
means for detecting at least one first user interaction;
means for launching a low power management process in response to detecting at least one notification and in response to detecting the at least one first user interaction, wherein the low power management process uses at least part of a boot memory of a processor, and wherein the low power management process runs while at least one operational layer of the apparatus is deactivated; and
means for enabling provision of one or more first user interface elements corresponding to the at least one detected notification.

2. An apparatus as claimed in claim 1, wherein the at least one operational layer that is deactivated comprises at least one of an operating system layer or an application layer.

3. An apparatus as claimed in any one of claims 1 or 2, wherein the means for launching the low power management process further comprises at least one of:
means for copying a first initialization code for at least one application corresponding to the detected at least one notification to the boot memory, or means for copying a second initialization code for the at least part of the boot memory of the processor that is used by the low power management process.

4. An apparatus as claimed in any one of the preceding claims, wherein the one or more first user interface elements comprise at least one of:
a preview of the detected at least one notification,
a preview of a first threshold number of detected one or more notifications, or
at least one element for allowing user interaction corresponding to the detected one or more notifications.

5. An apparatus as claimed in any one of the preceding claims, wherein the one or more notifications comprise one or more system notifications.

6. An apparatus as claimed in any one of the preceding claims, wherein the one or more notifications comprise one or more communication notifications.

7. An apparatus as claimed in any one of the preceding claims, further comprising means for storing the detected at least one notification in a notification buffer.

8. An apparatus as claimed in claim 7, wherein the means for enabling the provision of the one or more first user interface elements further comprises means for reading the stored detected at least one notification from the notification buffer.

9. An apparatus as claimed in any one of the preceding claims, further comprising:
means for detecting at least one second user interaction; and
means for launching one or more applications relating to the detected at least one notification in response to the detecting of the at least one second user interaction.

10. An apparatus as claimed in any one of the preceding claims, further comprising means for deactivating the low power management process after a first predefined time period.

11. An apparatus as claimed in any one of the preceding claims, wherein the means for checking for the one or more notifications further comprises means for periodically checking for notifications.

12. An apparatus as claimed in claim 11, wherein the means for periodically checking for the notifications further comprises means for using a real time clock, wherein the real time clock is part of the apparatus or is external to the apparatus.

13. An apparatus as claimed in any one of the preceding claims, wherein the apparatus is one or more of a mobile communication device or a smart wearable device.

14. A computer-implemented method comprising:
checking for one or more notifications;
detecting at least one first user interaction;
launching a low power management process in response to detecting at least one notification and in response to detecting the at least one first user interaction, wherein the low power management process uses at least part of a boot memory of a processor, and wherein the low power management process runs while at least one operational layer of the apparatus is deactivated; and
enabling provision of one or more first user interface elements corresponding to the at least one detected notification.

15. A computer program comprising instructions, which, when executed by an apparatus, cause the apparatus to carry out steps:
checking for one or more notifications;
detecting at least one first user interaction;
launching a low power management process in response to detecting at least one notification and in response to detecting the at least one first user interaction, wherein the low power management process uses at least part of a boot memory of a processor, and wherein the low power management process runs while at least one operational layer of the apparatus is deactivated; and
enabling provision of one or more first user interface elements corresponding to the at least one detected notification.
